# EUROPÄISCHE PATENTSCHRIFT

(11) **EP 1 213 393 B1**
(45) Veröffentlichungstag und Bekanntmachung des Hinweises auf die Patenterteilung: **20.10.2004**
(21) Anmeldenummer: 00126758.2
(22) Anmeldetag: 06.12.2000
(51) Int. Cl.: E02D 3/00, E01C 3/04, C09K 17/32

(54) **Verfahren zur Verstärkung bzw. Bewehrung von mineralischen Gemischen, insbesondere von Erdstoffsystemen unter Verwendung fasriger Materialien**
Process for reinforcing mineral mixtures, in particular earthy mixtures, using fibrous materials
Procédé pour renforcer des mixtures minérales, en particulier des mixtures terreuses, en utilisant des matériaux fibreux

(43) Veröffentlichungstag der Anmeldung: 12.06.2002
(73) Patentinhaber: Foundation for Development Aid ACP-EEC ASBL, 9991 Weiswampach (LU)
(72) Erfinder: Rauer, Lothar, Dr.-Ing., 09116 Chemnitz (DE); Wilhelm, Johannes, Dr.-phil., 09119 Chemnitz (DE); Kessler, Jürgen, Dr.-Ing. habil., 09600 Oberschöna (DE); Peschke, Catleen, Dipl.-Ing., 09599 Freiberg (DE)
(74) Vertreter: Grünecker, Kinkeldey, Stockmair & Schwanhäusser Anwaltssozietät

(56) Entgegenhaltungen:
- EP-A- 0 716 187
- EP-A- 0 971 065
- WO-A-99/14288
- CH-A- 232 328
- DE-A- 2 001 696
- DATABASE WPI Week 199907 Derwent Publications Ltd., London, GB; AN 1999-071084 XP002168167 & BR 9 701 834 A (RODRIGUES PEREIRA)
- DATABASE WPI Week 199051 Derwent Publications Ltd., London, GB; AN 1990-380122 XP002168168 & JP 02 274904 A (NIPPON HODO KK)

## Beschreibung

Die Erfindung bezieht sich auf das technische Gebiet der baustofflichen Verwendung von Fasermaterialien bei Verfahren einerseits zur Verstärkung bzw. Bewehrung einer vollständig oder überwiegend aus mineralischen Bestandteilen bestehenden Matrix, d.h. von Gemischen, die im Erd- Tief-, Straßen-, Damm- und/oder Deichbau eingesetzt werden, andererseits zur Verstärkung bzw. Bewehrung von Bauwerksteilen der vorgenannten Bausparten.

Beim Damm- und/oder Straßenbau auf weichem Untergrund werden zur Verbesserung von Bodeneigenschaften langzeitig wirkende Stabilisierungseffekte durch das Einmischen von hydraulisch abbindenden Zusätzen wie Zement, Kalk oder kalkhaltigen Filterstäuben aus Kohlekraftwerken erzielt bzw. angestrebt. Dabei muss man in Kauf nehmen, dass die durch die hydraulischen Abbindereaktionen eintretenden örtlichen Verfestigungen bewirken, dass, wie bei allen vergleichbaren Anwendungen mit hydraulischen Bindemitteln, die Übertragbarkeit von Zug- und Biegebelastungen abnimmt.
Bei rutschungs- und/oder erosionsgefährdeten Böschungen werden mit Verfahrenslösungen der Textilindustrie hergestellte Flächengebilde, auch als Geotextilien bekannt gewordene Bewehrungsmatten, eingesetzt und in der Regel sehr oberflächennah eingebaut. Dabei sind sowohl aus Kunststoff-Folien als auch aus Jute-, Kokos- oder Flachsfasern hergestellte Bewehrungsmatten mit unterschiedlichen Flächengewichten im Bereich von 400 g/m² bis zu 900 g/m² im Einsatz, z.B. der Firma BECO Bermüller & Co GmbH aus Nürnberg, Firmenschrift "Geotextilien Dichtungsbahnen BECO 97", 1997 Sie alle verfolgen Ziele wie den zeitlich (auf 2 ö 5 Jahre) befristeten Schutz von Oberflächenschichten vor Wasser- und Winderosion, die Flächenstabilisierung gegen Abrutschen (insbesondere bei Humusauflagen), die Wirkung einer rauhen Trag- und Armierungsschicht für Pionierbegrünungen, die Befestigung loser Bodenschichten bis zur Durchwurzelung und die Befestigung der Wurzelschicht selbst. In jedem Fall ist aber die Standsicherheit der jeweiligen Böschung eine notwendige Voraussetzung, die durch den Einsatz von Geotextilien in keiner Weise abgemindert wird.
Die vorgenannten technischen Lösungen des Einbaues von textilen Flächengebilden sind als zeitlich befristet anzusehen; sie müssen (in der Ingenieurbiologie) bis zur verfestigenden Wirkung der die Matten durchdringenden Bepflanzung und sich daraus entwickelnder Wurzelschichten gesichert sein. Bei der Materialauswahl für die Geotextilien sind neben den Verrottungseigenschaften auch Kriterien wie Umweltverträglichkeit der Geotextilabbauprodukte, Porendurchmesser der Geotextilrohstoffe im Verhältnis zur Korngrößenverteilung der zu schützenden Erdstoffschicht und die Zeitdauer der beabsichtigten bzw. geforderten Schutzfunktion zu erfüllen. Über eine am System der bewehrten Erde sich orientierende Weiterentwicklung ist in Heft 12/1999 der Zeitschrift "Straße und Autobahn" und im Pressedienst 12/00 der TFH Berlin unter der Bezeichnung "Lebend Bewehrte Erde (LBE)" berichtet worden, siehe auch Dachroth, "Baugeologie", Springer Verlag, 2. Auflage, 1992. Für den im o.g. Beispiel angewandten Lebendverbau gelten die Vorschriften aus DIN 18915 ö 18919 und die Richtlinien für die Anlage von Straßen-Landschaftgestaltung, Lebendverbau (RAS-LG 3 1983). Dabei sind zur Erhöhung der Untergrundbelastbarkeit, z.B. unter einem Abschnitt der Bundesautobahn BAB 113 im Bundesland Brandenburg lebende Pflanzenteile lagenweise als Bewehrung entsprechend einer statischen Berechnung in den ebenfalls lagenweise geschütteten und verdichteten Erdkörper eingelegt worden. Die zur Lebenserhaltung der Bewehrungsmaterialien dienenden Sproßteile können sich am Fahrbandrand entwickeln und sorgen gleichzeitig für naturnahe und landschaftsanpassbare Lärmschutzeffekte, so dass aufwendige technische Lärmschutzbauwerke in solchen Bereichen entfallen können. Ob allerdings die obige Vorgehensweise der Forderung genügt, dass die mit Lebendverbau zu schützenden Böschungen auch ohne die lebenden Pflanzenteile in sich stabil sein müssen, ist zu bezweifeln.
Aus der Fachliteratur (siehe z.B. Reuter/Klengel/Paser, "Ingenieurgeologie", Deutscher Verlag für Grundstoffindustrie GmbH, 3. überarbeitete und erweiterte Auflage, 1992) ist seit längerer Zeit bekannt, dass zur Sicherung von Hängen und Böschungen Deck- und Stabilbauweisen eingesetzt werden.
Deckbauweisen entsprechen bei einer begrenzten Tiefenwirkung von ≤ 15 cm unter anderem dem o.g. Anwendungsfall von Geotextilien. Stabilbauweisen zur Böschungssicherung nutzen im Böschungskörper eingebaute organische Materialien wie Faschinen, Palisaden, Flechtzäune u.a.m. oder andere Materialien wie Natursteinlagen, vorgefertigte Betonteile, Flächenbewehrungselemente aus unterschiedlichen Kunststoffen usw.
Die wichtigsten Nachteile der bekannten Vorgehensweisen zur Behandlung nicht ausreichend belastbarer oder organischer Böden mit Geotextilien sind zusammengefasst folgende:
- die zeitlich begrenzte Wirksamkeit von Flächenbewehrungsmatten,
- die Anwendungsbeschränkung der Flächenbewehrungsmatten auf meist oberflächennahe Schichten
   und
- die Entstehung vorgegebener, meist wasserwirksamer Gleitflächen.
- für Bewehrungsmaßnahmen wie die o.g. LBE ergeben sich Nachteile dadurch, dass die mechanischen Eigenschaften entsprechend lebend bewehrter Erdmassen sehr stark schwanken und darüber hinaus nur sehr schwer zahlenmäßig zu beschreiben sind.

Von den Mängeln und ihren Ursachen beim oben dargestellten Stand der Technik zur Verstärkung bzw. Bewehrung von Erdstoffsystemen und von erkenntnisliefernden Untersuchungsergebnissen zum Faserzustand von Bambus und artähnlichen Naturstoffen in bestimmten wahlweise erreichbaren Bearbeitungszuständen ausgehend, liegt der Erfindung die Aufgabe zugrunde, eine Verfahrensweise zu entwickeln, womit nachwachsende Rohstoffe, insbesondere Bambus, nach einer voranlaufenden Aufbereitung durch Verfahrensstufen wie Hackschnitzelherstellung, Zerfaserung und Klassierung sowie ggf. einer auf den Anwendungszweck bezogenen Oberflächenbehandlung in eine vollständig oder überwiegend aus mineralischen Bestandteilen bestehenden Bodenmatrix zur Verbesserung bodenmechanischer Eigenschaften im Sinne der Behinderung bzw. Einschränkung von Rissentstehung und Rissausbreitung, der besseren Aufnahme und Verteilung von Zug- und/oder Biegebelastungen, der Erhöhung von wirksamer Kohäsion (insbesondere Kohäsion c') und undränierter Scherfestigkeit (undränierte Kohäsion cᵤ), zur Verbesserung der Verformungseigenschaften (Verringerung von Setzungen und Setzungsunterschieden) sowie zur Reduzierung der Schrumpfungsneigung einsetzbar sind. Ein gattungsgemäßes Verfahren ist aus der JP-A-02 274 904 bekannt.
Die nachfolgend vorgeschlagene Erdstoffbewehrung mit hochfesten Fasern aus nachwachsenden Rohstoffen, insbesondere mit Bambusfasern, orientiert sich u.a. an der Langzeitbeständigkeit von Hölzern, die unter Ausschluß von Sauerstoffzutritt seit Jahrhunderten als Gründungspfähle in durchfeuchteten Böden geringer Tragfähigkeit verwendet werden und bei weiterer Aufrechterhaltung der o.g. konservierenden Bedingungen auch weiterhin unbefristet nutzbar bleiben werden.

Erfindungsgemäß wird unter Einschluss der gefundenen Erkenntnisse diese Aufgabe durch den kennzeichnenden Teil des Anspruches 1 gelöst. Weitere vorteilhafte Merkmale ergeben sich aus den abhängigen Ansprüchen.
Die erfindungsgemäße Lösung sieht vor, dass die zu Fasern und/oder Faserbündeln aufbereiteten nachwachsenden faserhaltigen Rohstoffe in Abhängigkeit vom Einsatzfall mit variabler Faserbündellängen- und Faserbündeldickenverteilung sowie veränderlichen Faser- bzw. Faserbündelanteilen dem zu verstärkenden Erdstoffsystem an der Einbaustelle dosiert zugegeben d.h. mit dem zu bewehrenden Boden zu mischen sind und/oder lagenweise unter Anwendung bekannter Mischsysteme eingemischt oder sowie anschließend unter definierten Feuchtigkeitsverhältnissen verdichtet und damit eingebaut werden oder dass die mit Fasern zu versetzenden Erdstoffe in einer separaten Mischanlage aufbereitet und anschließend an die jeweilige Einbaustelle transportiert werden und dass danach die faserhaltige Bodenmatrix entsprechend den nach bekannten Regeln der Technik ermittelten Bedingungen an der Einmischstelle eingebaut wird.
Dabei nutzt man neben dem Kostenvorteil aus dem Einsatz hochfester Naturfasern die (bei Vermeidung von Luftzutritt) gesicherte hohe Verrottungsbeständigkeit der eingebauten Bambusfasern, ihre hohe mechanische Belastbarkeit (mit Zugfestigkeitswerten bis ca. 300 MPa) sowie ihre im Gegensatz zu anderen Fasern hohe Elastizität auch bei Einbau im wassergesättigten Milieu zur Langzeiterhaltung der durch den Fasereinsatz bewirkten mechanischen Eigenschaftsveränderungen der Matrix. Damit ergeben sich neben den vorteilhaften technischen Wirkungen auch die der erheblichen Kostensenkung, da damit die zeitlich sehr begrenzt wirksamen oder anderweitig eingeschränkten Maßnahmen zur Kompensation ungünstiger Baugrundbedingungen und Bodenbeschaffenheit wie der Austausch von Erdmassen, das Einbringen von speziellen Gründungen, Fundamenten und/oder Stützwänden zur Verbesserung bodenmechanischer Eigenschaften mit dem Ziel der Behinderung bzw. Einschränkung von Rissentstehung und Rissausbreitung, der besseren Aufnahme und Verteilung von Zug- und/oder Biegebelastungen, der Erhöhung von wirksamer Kohäsion (insbesondere Kohäsion c') und undränierter Scherfestigkeit (undränierte Kohäsion cᵤ), zur Verbesserung der Verformungseigenschaften (Verringerung von Setzungen und Setzungsunterschieden) sowie zur Reduzierung der Schrumpfungsneigung entfallen.
Im Rahmen der erfindungsgemäßen Lehre werden die Fasern in einer vollständig oder überwiegend aus feinkörnigen mineralischen Bestandteilen bestehenden Matrix zur Behinderung entstehender Risse und zur Übertragung von Zug- und Biegekräften über die Rissufer hinaus so eingemischt, so dass eine kraft- und formschlüssige Einbindung in der jeweiligen Matrix erreicht wird, wobei die granulometrischen Eigenschaften des Matrixsystems, die Menge und die Festigkeitseigenschaften der zuzugebenden Fasern sowie ihre typischen Merkmale wie Faserlängen- und Faserdickenverteilung aufeinander abgestimmt sind. In Abhängigkeit von der mineralogischen und granulometrischen Zusammensetzung der mit Fasern zu verstärkenden Erdstoffe erfahren die Fasern zur Verbesserung des Haftverbundes zwischen ihnen und den sie umgebenden Mineralteilchen vor dem Einbau eine Behandlung zur Beeinflussung der Faseroberflächeneigenschaften.
Als weitere Ausgestaltungsmerkmale der Erfindung können spezielle Vorbehandlungsstufen wie den Wassertransport in den Fasern behindernde umweltverträgliche Imprägnierungen, zusätzliche physikalische und/oder chemische Behandlungen der Fasern sowie zusätzliche Trocknungsvorgänge vorgesehen werden. Ebenso können für die faserverstärkten Matrixsysteme als weitere Ausgestaltungsmerkmale der Erfindung spezielle Maßnahmen zur Faserausrichtung, zur Oberflächenbehandlung der mit Fasern versehenen Schichten und/oder Versiegelungsmaßnahmen eingeordnet werden. Die für den Einsatz als biege-, scher- und/oder zugkraftübertragende Verstärkungen vorgeschlagenen hochfesten organischen Fasern aus nachwachsenden Rohstoffen sollen vorzugsweise als grobfasrige Bambusfaserpartikel mit d_{Faser} ≥ 0,5 mm und Längen im Bereich 4+6 mm ≤ I_{Faser} ≤ 50ö60 mm zum Einsatz kommen.

Nachfolgende Untersuchungs- und Ausführungsbeispiele sollen die Erfindung näher erläutern.

### Ausführungsbeispiel 1:

Im 1. Ausführungsbeispiel wird vorgeschlagen, eine anmoorige durch langsame Verlandung eines Baches entstandene und jetzt wegen der geplanten Erweiterung einer Hausmülldeponie mit zu überbauenden Fläche so durch den Zusatz von Bambusfasern zu behandeln, daß die erforderliche Flächenbelastung aus Auflasten durch Deponiedichtungsschichten mit einer Gesamtstärke von 5 m und einer Deponiegutschicht von 20 m Höhe ohne Grundbruchgefahr aufgenommen werden kann. Anstelle der konservativen Methode, die gesamte in ihrer Tragfähigkeit eingeschränkte Fläche bis auf den gewachsenen Untergrund zwecks Entsorgung des ausgebauten Materials auszuräumen, danach lagenweise Schotter- und Kiesschichten verdichtet einzubauen und darauf eine technische Dichtungsschicht entsprechend der Projekterfordernisse einzubauen, wird das gesamte, mit Ausnahme der untersten ca. 25 cm mächtigen Schicht ausgebaute Material mit überwiegend grobfasrigen Bambusfaserpartikeln der Abmessungsbereiche d_{Faser} ≥ 0,5 mm, Partikellängen 4ö6 mm ≤ I_{Faser} ≤ 50ö60 mm vermischt. Es wird davon ausgegangen, dass der organische Anteil im Aushubmaterial 10 Masse-% beträgt, so dass die bisher übliche Erdbau-Obergrenze von 15 Masse-% für organische Bodenbestandteile maximal 5 Masse-% Bambusfasem zulassen würde. Grundsätzlich ist jedoch davon auszugehen, dass zur Erreichung vorgegebener vom für den Einbauort bambusfaserbewehrter Erdstoffe abhängigen bodenmechanischen Eigenschaften auch Fasermengenanteile verwendet werden können, die von der als Beispiel aufzufassenden Marke mit ≤ 5 Masse-% erheblich nach oben oder unten abweichen können. In diesem Ausführungsbeispiel werden jedoch 2 Masse-% vorgesehen. Für den Fasereinbau kommen z.B. technische Geräte wie Dünger- oder Kalkstreuer für das flächenhafte Ausbringen der Bambuspartikel auf der jeweiligen mit ca. 25 cm Dicke zu messenden planierten Fläche und Bodenfräsen zum Einarbeiten von auf die jeweilige Bodenschicht aufgestreuten Bambusfasern zum Einsatz. Beim Einarbeiten der Bambusfasern wird die unter der aktuellen Fasereinbauzone liegende Schicht mit einer 3ö5 cm tiefen Oberflächenschicht in den laufenden Einmischprozeß integriert. Durch eine Überwachung des Fasereinbaus mittels Schichtproben sind die Gleichmäßigkeit der Bambusfaserverteilung in der Fläche und in der Schichttiefe sowie die Scherfestigkeit und die Zusammendrückbarkeit des faserhaltigen Probenmaterials zu kontrollieren. Die Ermittlung der erforderlichen/zulässigen Fasermenge ist in der Planungsphase an Hand von Laboruntersuchungen mit aus dem Baustellenbereich gewonnenen Kernproben vorzunehmen. Durch eine ingenieurtechnische Überwachung des Fasereinbaus sind die Gleichmäßigkeit der Faserverteilung, die kontinuierliche Einmischung der Fasern über alle mit ihnen zu verstärkenden Einbauschichten und die Verdichtung des faserhaltigen Mischgutes zu kontrollieren. Die Steuerung der Fasereinbaus erfolgt in Abhängigkeit von den Ergebnissen der geotechnischen Kontrollen und der o.g. Fasereinbauüberwachung. Ggf. kann zur Erhöhung der Langzeitdruckbelastbarkeit und zur Erhöhung des für die Langzeitstabilität der Fasern wichtigen Alkaligehaltes auch das Einmischen der Fasern mit der Zugabe von Kalkmehl, Zement oder Filterasche kombiniert werden.

### Ausführungsbeispiel 2:

Im 2. Ausführungsbeispiel wird vorgeschlagen, beim Bau eines Hochwasserschutzdeiches auf setzungsgefährdetem kleihaltigem Baugrund mit Hilfe von Bambusfasern sowohl eine Verfestigung des Baugrundes als auch eine Anpassung der geomechanischen Eigenschaften des aus früheren Deichbaumaßnahmen rückgebauten Klei-Sand-Gemisches an die Anforderungen des Deichbaues mit günstigeren konstruktiven Damm- und Untergrundparametern als bisher zu erreichen. Dazu wird nach dem Abräumen der Aufstandsfläche des neu zu bauenden Deichabschnittes die unterste bis 25 cm mächtige Scheibe unter Einsatz eines düngerstreuerartigen horizontalen Schleuderrades zur Verteilung der Bambuspartikel auf der planierten Fläche und mit Bodenfräsen zum Einarbeiten der Bambusfasern in der Schicht bearbeitet. Die Bambusfaserzugabe wird unter Beachtung vorhandener Organikbestandteile im zu verarbeitenden Boden auf maximal 5 M.-% begrenzt. Die Vorgehensweise wiederholt sich bei allen nachfolgenden kleihaltigen Schichten, wobei sichergestellt ist, daß beim Einarbeiten der Bambusfasern die unter der aktuellen Fasereinbauzone liegende bereits mit Fasern bestückte und planierte sowie verdichtete Schicht bis zu einer Tiefe ≤ 5 cm in den laufenden Einmisch- und Verdichtungsprozeß der Nachfolgeschicht einbezogen wird. Durch eine kontrollierte Veränderung des Faseranteils je Schicht und durch Modifizierung der Schichtdicke ist man in der Lage, entsprechend den zu erwartenden Beanspruchungsbedingungen des Deiches in Abhängigkeit von der Faserzumischmenge die Deichkonstruktion beanspruchungsgerecht auszuführen. Die Überwachung des Fasereinbaus mittels Schichtproben zur Kontrolle der Gleichmäßigkeit der Bambusfaserverteilung in der Fläche und in der Schichttiefe sind bereits im Deichbauprojekt festzuschreiben, um auch Eigenschaften wie die Scherfestigkeit, die Zusammendrückbarkeit und die Setzungseigenschaften des mit Bambusfasern bestückten Deichbaumaterials zu kontrollieren. Die im Deichkörper eingelagerten Spülsandbereiche werden in ähnlicher Weise wie die kleihaltigen Zonen mit überwiegend grobfasrigen Bambusfaserpartikeln (d_{Faser}≥ 0,5 mm, Partikellängen im Bereich 4ö6 mm ≤ I_{Faser} ≤ 50ö60 mm) ausgestattet, um horizontale oder vertikale Sprünge in der mechanischen Belastbarkeit des Deichbauwerkes weitgehend zu vermeiden.

### Ausführungsbeispiel 3:

In einer alternativ zum Ausführungsbeispiel 2 beschriebenen Verfahrensweise zum Bau eines Hochwasserschutzdeiches auf setzungsgefährdetem kleihaltigem Baugrund unter Verwendung von Bambusfasern zur Bewehrung und Verstärkung wird die Bambusfasereinmischung in einer separaten Mischanlage mit in der Betonindustrie üblichen Zwangsmischern vorgenommen und das einbaufertige Mischgut auf der Deichbaustelle angeliefert und eingebaut. Die Schichtenaufbringung und die Behandlung der eingebauten Schichten sollen analog der Vorort-Einbaupraxis der Bambusfasern erfolgen.

Die zu den Ausführungsbeispielen durchgeführten Untersuchungen zum Einfluss der Bambusfaserzumischung in Klei-Böden, insbesondere zur Feststellung der Scherfestigkeit und Zusammendrückbarkeit von Klei-Böden, wobei 2 Masse-% grobteilige Bambusfasern mit den vorgenannten Dicken- und Längenverhältnissen in Klei-Boden im natürlichen Zustand (w ≈ 1,0) eingegeben und eingemischt wurde, ergaben folgende Ergebnisse:
- Der Reibungswinkel φ₀ der Gesamt-Scherfestigkeit bei Erstbelastung erhöht sich von 30,5° bei Klei im natürlichen Zustand auf 32° bei Klei mit einer Bambusfaserzumischung von 2 Masse-%.
- Für die vorbelastete Kleiprobe mit o.g. Bambusfaseranteil verändert sich die Gesamt-Scherfestigkeit bei einem wirksamen Reibungswinkel φ' = 27,2° von einer wirksamen Kohäsion c' = 53 KN/m² (bei der Kleiprobe ohne Faserzumischung) auf c' = 59,5 KN/m².
- Es wurde ersichtlich, dass man beim Klei mit Bambusfasem die volle Scherfestigkeit bereits nach geringen Verschiebungen erreichte, während beim Klei ohne Faserzugabe größere Scherwege zur Mobilisierung der vollen Scherfestigkeit notwendig sind.
- Kompressionsversuche mit vorgenannten Proben haben gezeigt, dass eine nahezu lastunabhängige Verringerung bezogener Setzungen um ca. 4 % erreicht wurde. Daraus sind je nach Mächtigkeit der Kleischicht entsprechende Verringerungen der absoluten Setzungsbeträge und bauwerksbezogen Verringerungen von Setzungsdifferenzen für den bambusfaserverstärkten Klei-Untergrund zu erwarten.
- Messungen der undrainierten Scherfestigkeit mit der Laborflügelsonde haben ergeben, dass die Faserzumischung generell zu einer Vergrößerung der undrainierten Scherfestigkeit cᵤ führt. Im untersuchten Konsistenzzustand breiig-flüssig (Klei mit w ≈ 1,0) ergab sich durch die Bambusfaserzumischung eine cᵤ -Vergrößerung um das zwei- bis dreifache.
- Im Ergebnis von Schrumpfungsversuchen durch Austrocknung wurde festgestellt, dass infolge der Faserzumischung eine geringere Volumenänderung auftritt und damit die Gefahr von Trockenrissen geringer wird. Das Schrumpfmaß Vₛ als Verhältnis der durch Austrocknung eintretenden Volumenänderung zum Ausgangsvolumen verringerte sich durch die Bambusfaserzumischung um 5 %; bei Klei ohne Faserzumischung ergab sich Vₛ = 57 % und bei Klei mit Bambusfaserzumischung erhielt man Vₛ = 52 %.

## Patentansprüche

1. Verfahren zur Verstärkung bzw. Bewehrung von mineralischen Gemischen, insbesondere von Erdstoffsystemen unter Verwendung fasriger Materialien aus nachwachsenden faserhaltigen Rohstoffen als Bewehrungs- bzw. Verstärkungsmaterialien für mineralische Gemische im Erd-, Tief-, Straßen- Damm- und/oder Deichbau
**dadurch gekennzeichnet,**
**dass** die nach bekannten Verfahren zu Fasern und/oder Faserbündeln aufbereiteten nachwachsenden faserhaltigen Rohstoffe in Abhängigkeit vom Einsatzfall mit variabler Faserbündellängen- und Faserbündeldickenverteilung sowie veränderlichen Faser- bzw. Faserbündelanteilen mit mehr als 50 Masse-% grobfasriger Partikel der Abmessungen d_{Faser} ≥ 0,5 mm und Partikellängen im Bereich 4+6 mm ≤ I_{Faser} ≤ 50ö60 mm in Masseanteilen = 15 % dem zu verstärkenden Erdstoffsystem an der Einbaustelle dosiert zugegeben werden, dass sie lagenweise unter Anwendung bekannter Mischsysteme eingemischt werden, dass anschließend unter definierten Feuchtigkeitsverhältnissen entsprechend dem bautechnisch erforderlichen Einbauwassergehalt verdichtet und auf diese Weise eingebaut wird.

2. Verfahren nach Anspruch 1,
**dadurch gekennzeichnet,**
**dass** gegebenenfalls die mit Fasern bzw. Faserbündeln zu versetzenden Erdstoffe in einer separaten Mischanlage aufbereitet und anschließend an die jeweilige Einbaustelle transportiert und dort unter örtlich festzulegender Bedingungen verdichtend eingebaut werden.

3. Verfahren nach Anspruch 1 oder 2,
**dadurch gekennzeichnet,**
**dass** beim Einarbeiten der Fasern und/oder Faserbündel oder beim Einbau der mit Fasern und/oder Faserbündeln versetzten Erdstoffe die unter der aktuellen Faser-/Erdstoffeinbauzone liegende Schicht mit einer 3 bis 5 cm tiefen Oberflächenschicht in den laufenden Einmisch-Einbau-Verfahrensschritt integriert wird.

4. Verfahren nach einem der Ansprüche 1 bis 3,
**dadurch gekennzeichnet,**
**dass** die einzubringenden Fasern bzw. Faserbündel aus den nachwachsenden faserhaitigen Rohstoffen vorzugsweise aus Bambus oder aus ähnlich konstituierten Naturrohstoffen bestehen

5. Verfahren nach einem der Ansprüche 1 bis 4,
**dadurch gekennzeichnet,**
**dass** die Fasern und/oder Faserbündel mit variablen Faserbündellängen- und Faserbündeldickenverteilung sowie veränderlichen Faser- bzw Faserbundelanteilen mit mehr als 50 Masse-% grobfasriger Partikel der Abmessungen d_{Faser} ≥ 0,5 mm und Partikellängen im Bereich 4+6 mm ≤ I_{Faser} ≤ 50+60 mm in Masseanteilen von vorzugsweise 2 bis 5 Masse-% dem zu verstärkendem Erdstoffsystem zugegeben wenden.

6. Verfahren nach einem der Ansprüche 1 bis 5,
**dadurch gekennzeichnet,**
**dass** in Abhängigkeit von der mineralogischen und granulometrischen Zusammensetzung der mit Fasern zu verstärkenden Erdstoffe die Fasern zur Verbesserung des Haftverbundes zwischen ihnen und den sie umgebenden Mineralteilchen vor dem Einbau einer Behandlung zur Verbesserung ihrer Haftverbundeigenschaften unterzogen werden, indem die mechanisch aufbereiteten und mit einer entsprechend den Vorort-Einbaubedingungen feuchteseitig eingestellten Fasern einer Behandlung zur Oberflächenversiegelung und zur Verbesserung der Haftungseigenschaften in der Mineratmatrix mit feuchtigkeitsunempfindlichen Reaktionsharzen besprüht und/oder vermischt sowie anschließend mit feinkörnigen auf den Reaktionsharzoberflächen bis maximal 50% ihrer Partikelgröße einsinkenden, feinkörnigen, mineralischen Stoffen wie Gesteinsmehl, feingemahlener Quarzsand, Zement, Kalk und/oder Kraftwerksfilterasche zur Abdeckung der Harzoberflächen bestäubt werden.

7. Verfahren nach Anspruch 1 oder 6,
**dadurch gekennzeichnet,**
**dass** die Fasern zur Verbesserung des Haftverbundes zwischen ihnen und den sie umgebenden Mineralteilchen vor dem Einbau einer Behandlung mit oberflächenaktiven Substanzen unterzogen und danach auf eine Faserfeuchte im Bereich von 5 bis 18 %, vorzugsweise 10 bis 13 %, eingestellt werden.

8. Verfahren nach einem der Ansprüche 1 bis 7,
**dadurch gekennzeichnet,**
**dass** zur Verbesserung der Langzeifbestandigkeit der Fasern während des Prozesses der Faserausbringung trockene, feinteilige, alkalisch reagierende Materialien wie Kalk, Zement und/oder Kraftwerksfilterasche zur Einstellung von pH-Werten ≥ 12 auf die mit Fasern zu verstärkenden Erdstoffe gemeinsam mit den Fasern ausgebracht und eingemischt werden.

9. Verfahren nach einem der Ansprüche 1 bis 8,
**dadurch gekennzeichnet,**
**dass** vor der Faserbehandlung oder vor dem Fasereinbau in Erdstoffe mit oder ohne hydraulisch abbindende Bestandteile eine bis zu 50 h umfassende Wasserlagerung der Fasern bzw. Faserbündel vorgeschaltet wird.

10. Verfahren nach einem der Ansprüche 1 bis 9,
**dadurch gekennzeichnet,**
**dass** für die mit Fasern bzw. Faserbündeln ausgerüsteten mineralischen Matrixsysteme an sich bekannte Nachbehandlungsschritte zur Trocknung und zur Beschleunigung von Abbindevorgängen eingeordnet werden und/oder Nachbehandlungen für die Faseroberflächen eingeordnet werden.

## Claims

1. A process for reinforcing mineral mixtures, in particular earth systems using fibrous materials comprising renewable fibre-containing raw materials as the reinforcing materials for mineral mixtures in earthworks, underground works and the construction of roads, embankments and/or dykes, **characterised in that** the renewable fibre-containing raw materials, which are prepared in accordance with known methods to produce fibres and/or fibre bundles, are added to the earth system to be reinforced at the site of placement. in metered manner in dependence on the application case with variable distributions of the lengths and the thicknesses of the fibre bundles and with varying proportions of fibres and fibre bundles, with more than 50% by mass of coarse-fibred particles having dimensions of d_{fibre}≥ 0.5 mm and particle lengths in the range between 4 - 6 mm ≤ l_{fibre} ≤ 50 - 60 mm in proportions by mass equal to 15%, **in that** they are mixed in in layers using known mixing systems, **in that** then under defined conditions of moisture corresponding to the placement water content dictated by the technical demands they are compacted and in this way incorporated.

2. A process according to Claim 1, **characterised in that** where appropriate the earth to which fibres or fibre bundles are to be added is prepared in a separate mixing plant and then transported to the site of placement concerned and incorporated there with compaction under conditions which are to be established on site.

3. A process according to Claim 1 or 2, **characterised in that** when the fibres and/or fibre bundles are mixed in, or when the earth to which fibres and/or fibre bundles have been added is put in place, the layer lying below the current fibre/earth placement zone is integrated into the current process step of mixing in and placement with a surface layer which is 3 to 5 cm thick.

4. A process according to one of Claims 1 to 3, **characterised in that** the fibres or fibre bundles to be introduced, comprising the renewable fibre-containing raw materials, preferably comprise bamboo or natural raw materials of a similar composition.

5. A process according to one of Claims 1 to 4, **characterised in that** the fibres and/or fibre bundles are added to the earth system to be reinforced with variable distributions of the lengths and the thicknesses of the fibre bundles and with varying proportions of fibres and fibre bundles, with more than 50% by mass of coarse-fibred particles having dimensions of d_{fibre} ≥ 0.5 mm and particle lengths in the range between 4 + 6 mm ≤ l_{fibre} ≤ 50 + 60 mm in proportions by mass of preferably 2 to 5% by mass.

6. A process according to one of Claims 1 to 5, **characterised in that** in dependence on the mineralogical composition and particle size distribution of the earth to be reinforced with fibres, before they are incorporated the fibres are subjected to a treatment to improve their adhesive properties in order to improve the adhesion between them and the mineral particles surrounding them, **in that** the mechanically prepared and ... with a ... fibres which have been adjusted in their moisture content in accordance with the on-site placement conditions to a treatment for surface sealing and for improvement of the adhesion properties in the mineral matrix are sprayed and/or mixed with reactive resins that are not sensitive to moisture and are then dusted with fine-grain fine-grain mineral substances that penetrate the reactive resin surfaces to at most 50% of their particle size, such as crushed rock, finely ground quartz sand, cement, lime and/or filter ash from power stations, to cover the resin surfaces.

7. A process according to Claim 1 or 6, **characterised in that** before they are incorporated, the fibres for improving the adhesion between them and the mineral particles surrounding them are subjected to a treatment with surface-active substances and thereafter are adjusted to a fibre moisture in the range from 5 to 18%, preferably 10 to 13%.

8. A process according to one of Claims 1 to 7, **characterised in that**, to improve the long-term stability of the fibres during the procedure of spreading the fibres, dry, fine-particle, alkaline-reacting materials such as lime, cement and/or filter ash from power stations are, for the purpose of adjusting pH values ≥ 12, spread with the fibres onto the earth to be reinforced with fibres and mixed in.

9. A process according to one of Claims 1 to 8, **characterised in that** before the fibres are treated or before the fibres are incorporated into earth with or without hydraulically setting constituents, the fibres or fibre bundles are previously stored in water for a period of up to 50 h.

10. A process according to one of Claims 1 to 9, **characterised in that** after-treatment steps which are known per se for drying and for accelerating setting procedures are included for the mineral matrix systems equipped with fibres or fibre bundles, and/or after-treatments are included for the fibre surfaces.

## Revendications

1. Procédé de renforcement ou d'armature de mélanges minéraux, en particulier de systèmes terreux, en utilisant des matériaux fibreux de matières premières d'origine végétale en tant que matériaux d'armature ou de renforcement pour des mélanges minéraux dans des travaux de terrassement, travaux publics, construction routière, de remblais et/ou de digues, **caractérisé en ce que** les matières premières fibreuses d'origine végétale, traitées suivant les procédés connus en fibres et/ou faisceaux de fibres, sont ajoutées par doses sur le chantier au système terreux à renforcer, en fonction du cas d'utilisation, avec une répartition variable des longueurs et épaisseurs de faisceaux de fibres ainsi qu'avec des pourcentages modifiables de fibres ou faisceaux de fibres, avec plus de 50% en masse de particules à grosses fibres de dimensions d_{fibres} ≥ 0,5 mm et de longueurs de particules dans la plage de 4 - 6 mm ≤ l_{fibres} ≤ 50 - 60 mm, en pourcentages en masse = 15%, **en ce qu'** elles sont mélangées par couches en utilisant des systèmes de mélange connus, **en ce qu'**elles sont ensuite compactées dans des conditions d'humidité définies, en fonction de la teneur en eau requise par la technique de construction, et incorporées de cette manière.

2. Procédé suivant la revendication 1, **caractérisé en ce que** les terres à mélanger avec des fibres ou faisceaux de fibres sont éventuellement traitées dans une installation de mélange séparée, puis transportées sur le chantier respectif où elles sont incorporées avec un compactage dans des conditions à définir localement.

3. Procédé suivant l'une des revendications 1 et 2, **caractérisé en ce que**, lors de l'insertion des fibres et/ou faisceaux de fibres ou lors de l'incorporation des terres mélangées aux fibres et/ou faisceaux de fibres, la couche située au-dessous de la zone d'incorporation actuelle des terres/fibres est intégrée avec une couche superficielle de 3 à 5 cm de profondeur dans la phase de procédé en cours de mélange et d'incorporation.

4. Procédé suivant l'une des revendications 1 à 3, **caractérisé en ce que** les fibres ou faisceaux de fibres à introduire se composent des matières premières fibreuses d'origine végétale, de préférence de bambous ou de matières premières naturelles de constitution analogue.

5. Procédé suivant l'une des revendications 1 à 4, **caractérisé en ce que** les fibres et/ou faisceaux de fibres sont ajoutés au système terreux à renforcer avec une répartition variable des longueurs et épaisseurs de faisceaux de fibres et des pourcentages modifiables de fibres ou faisceaux de fibres, avec plus de 50% en masse de particules à grosses fibres de dimensions d_{fibres} ≥ 0,5 mm et de longueurs de particules dans la plage 4 + 6 mm ≤ l_{fibres} ≤ 50 + 60 mm, en pourcentages en masse de préférence de 2 à 5 %.

6. Procédé suivant l'une des revendications 1 à 5, **caractérisé en ce que**, en fonction de la composition minéralogique et granulométrique des terres à renforcer par des fibres, ces dernières sont soumises avant leur incorporation à un traitement d'amélioration de leurs propriétés d'adhérence, pour améliorer le compound d'adhérence entre elles et les particules minérales les entourant, les fibres traitées mécaniquement et réglées sur une humidité conforme aux conditions d'incorporation sur le site étant aspergées et/ou mélangées à des résines de réaction insensibles à l'humidité dans un traitement de scellement de surface et d'amélioration des propriétés d'adhérence dans la matrice minérale, puis étant saupoudrées de matières minérales à grains fins s'enfonçant sur les surfaces de résine de réaction jusqu'à 50% maximum de leur grosseur de particules, telles que roche pulvérisée, sable siliceux finement broyé, ciment, chaux et/ou cendres volantes de centrales thermiques, pour recouvrir les surfaces de résine.

7. Procédé suivant l'une des revendications 1 et 6, **caractérisé en ce que** les fibres, pour améliorer le compound d'adhérence entre elles et les particules minérales les entourant, sont soumises avant l'incorporation à un traitement par des substances tensioactives, puis sont réglées sur une humidité dans la plage de 5 à 18%, de préférence de 10 à 13%.

8. Procédé suivant l'une des revendications 1 à 7, **caractérisé en ce que,** pour améliorer la résistance à long terme des fibres, des matières à réaction alcaline sèches et fines, telles que chaux, ciment et/ou cendres volantes de centrales thermiques, sont épandues et mélangées conjointement avec les fibres sur les terres à renforcer par ces dernières, pendant le processus d'épandage, pour régler des valeurs pH ≥ 12.

9. Procédé suivant l'une des revendications 1 à 8, **caractérisé en ce qu'**une immersion de jusqu'à 50 h des fibres ou faisceaux de fibres précède le traitement ou l'incorporation des fibres dans des terres, avec ou sans composants à prise hydraulique.

10. Procédé suivant l'une des revendications 1 à 9, **caractérisé en ce que,** pour les systèmes de matrices minérales équipés de fibres ou de faisceaux de fibres, des phases de post-traitement connues en soi sont intégrées pour le séchage et l'accélération des processus de prise et/ou des post-traitements pour les surfaces de fibres.
